# EUROPEAN PATENT APPLICATION

(11) **EP 1 559 690 A1**
(43) Date of publication of application: **03.08.2005**
(21) Application number: 03758708.6
(22) Date of filing: 03.10.2003
(51) Int. Cl.: C03B 23/033, C03B 27/044, C03B 35/16

(54) **METHOD AND DEVICE FOR PRODUCING CURVED REINFORCED GLASS PLATE**

(30) Priority: 21.10.2002 JP 2002306303
(71) Applicant: Nippon Sheet Glass Co., Ltd., Osaka-shi, Osaka 541-0041 (JP)
(72) Inventor: YOSHIZAWA, Hideo, Nippon Sheet Glass Co., Ltd., Osaka-shi, Osaka 541-0041 (JP)
(74) Representative: Hering, Hartmut, Dipl.-Ing.
(86) International application number: PCT/JP2003/012714
(87) International publication number: WO 2004/035492

(57) **Abstract**

A method for manufacturing a tempered glass sheet curved in at least one dimension is provided. A glass sheet (11) heated to near its softening temperature in a furnace (21) is bent into a bent glass sheet (12) of a predetermined shape. The bent glass sheet (12) is quenched by a quenching/secondary bending apparatus (40) with different cooling powers being applied to upper and lower surfaces of the bent glass sheet to thereby manufacture a further curved tempered glass sheet (10) of desired shape.

## Description

This invention relates to a method and apparatus for manufacturing a curved tempered glass sheet by heating a glass sheet to near its softening temperature, bending the heated glass sheet to a predetermined shape and air-quenching the curved glass sheet.

As automobile window glass and glass in furniture, curved tempered glass sheets are widely used. In manufacturing a curved tempered glass sheet, first a flat glass sheet is cut to a predetermined shape, and then the edge of the cut glass sheet is ground. Next, the glass sheet is heated in a furnace to near its softening temperature and bent to a predetermined shape, and then the bent glass sheet is air-quenched to produce a curved tempered glass sheet.

Automobiles have various body models, and curved tempered glass sheets have to be prepared to match each of these body models. However, to prepare many different curved tempered glass sheets it is necessary to prepare corresponding forming molds for each model of curved tempered glass sheet, and equipment costs mount up.

As an example of a method for overcoming this problem, a method of pre-bending a glass sheet and then strongly cooling one side surface of this bent glass sheet to curve the pre-bent glass sheet more deeply, or shallowly, is known, for example from Japanese Patent Post-Exam Publication No. SHO-44-14832.

An apparatus for forming a flat glass sheet into a curved shape by strongly cooling its lower side is also known, for example from Japanese Patent Laid-Open Publication No. SHO-52-110719.

In Japanese Patent Post-Exam Publication No. SHO-44-14832, a glass sheet is supported in a floating state by gas blown up from a bed, the glass sheet is heated and bent while being conveyed in this state, and then by one side of the glass sheet being cooled more strongly than the other side in a quenching step, a curvature adjustment determining whether the glass sheet, which had been bent in a previous step, is curved more deeply, or shallowly, can be carried out. Consequently, it is possible to form various curved tempered glass sheets just by adjusting the degree of the cooling, and it is not necessary for different forming molds to be prepared for each different model of curved tempered glass sheet.

In the above bending method, in curving the glass sheet in the quenching step, because the glass sheet has been pre-bent to a predetermined shape in a previous step, it is possible to curve the glass sheet deeply.

However, because the curving of the glass sheet by quenching is carried out without the glass sheet being restrained, deformations arise in the glass sheet as each portion is cooled, and it is difficult to match the curved shape of the glass sheet to the desired design shape over the entire area of the glass sheet. That is, with a glass sheet curved by quenching, it is often the case that in certain places it will curve more deeply than the desired design shape, and in certain places it will curve more shallowly than the desired design shape.

In the bending method of Japanese Patent Laid-Open Publication No. 52-110719, on the other hand, as a flat glass sheet heated to near its softening temperature is restrained and conveyed by upper and lower conveyor rollers and quenched, high-pressure air is blown at the lower side of the flat glass sheet to cool it strongly. During this cooling, the flat glass sheet tries to curve convexly downward. However, because the glass sheet is restrained by the upper and lower conveyor rollers, it cannot deform into a curved shape.

After that, by the flat glass sheet being carried out from between the upper and lower conveyor rollers and the restraining of the glass sheet by the upper and lower conveyor rollers thus being ended, the glass sheet can be formed into a downwardly convex curved shape. Consequently, it is possible to form various curved tempered glass sheets just by adjusting the degree of the cooling, and it is not necessary for different forming molds to be prepared for each different shape of curved tempered glass sheet.

With the bending disclosed in Japanese Patent Laid-Open Publication No. SHO 52-110719, the flat glass sheet is restrained by upper and lower conveyor rollers as it is formed to a curved shape by the lower side of the glass sheet being strongly cooled. Consequently, it is possible to match the curved shape of the glass sheet to the desired design shape over the whole surface area of the glass sheet. Specifically, when the lower side of the flat glass sheet is strongly cooled, because curving occurs along the whole periphery of the glass sheet, the flat glass sheet curves to an extremely shallow spherical plane.

However, because the flat glass sheet is curved by cooling only, although the glass sheet can be curved to an extremely shallow spherical plane, it is difficult to curve the glass sheet deeply. Consequently, it is difficult with this method to manufacture a glass pane curved at least in one dimension for use as, for example, a vertically movable side window glass for automobiles.

It is an object of the present invention to provide a method and apparatus for manufacturing a curved tempered glass sheet (a) corresponding to a variety of curved glass sheets; (b) conforming to a desired design shape over the whole area thereof, and (c) curved in at least one dimension for installation as a vertically movable side window glass on an automobile or the like.

According to an aspect of the present invention, there is provided a curved tempered glass sheet manufacturing method comprising a step of heating a glass sheet to near its softening temperature in a furnace; a step of bending the heated glass sheet to a predetermined shape to provide a curved glass sheet; and a step of changing the shape of the curved glass sheet by, while the curved glass sheet is restrained by a pair of a plurality of upper curved support rollers and a plurality of lower curved support rollers and conveyed by these rollers, quenching the curved glass sheet with different cooling powers being applied to its upper and lower surfaces.

After the glass sheet is bent to a predetermined shape, the curved shape of the glass sheet bent to the predetermined shape is changed by adjusting the cooling powers. Consequently, it is not necessary for different forming molds to be prepared for each different shape of curved tempered glass sheet as in prior art.

The glass sheet is bent to a certain depth before the shape of the curved glass sheet is changed by the cooling powers, applied to the upper and lower sides of the glass sheet, being adjusted. In this way, it is possible to curve a glass sheet in two steps: a step of bending a glass sheet to a predetermined shape, and a step of changing the curved shape of the curved glass sheet with a difference in cooling powers. Thus, the glass sheet can be bent into a deep or shallow curved shape through the two steps.

During the quenching of the glass sheet, bent to the predetermined shape, with different cooling powers being applied to its upper and lower surfaces, the glass sheet is mechanically restrained in shape over its entire area. Because the curved glass sheet is mechanically restrained over its entire area, it can be prevented from deforming locally, and a curving stress such that deformation will occur uniformly over the entire area is generated or developed in the curved glass sheet. After such a curving stress is developed in the entire glass sheet, the glass sheet is released from the mechanical restraining so that the glass sheet is curved uniformly by the curving stress breaking out or escaping from the entire glass sheet. Thus, there can be obtained a curved tempered glass sheet having a desired design shape over the entire area thereof.

Preferably, each of the upper and lower curved support rollers has a plurality of large-diameter, segmented rollers provided on a curved core support roller shaft, and the surfaces of these large-diameter segmented rollers are covered with a heat-resistant material. Because each support roller has numerous large-diameter glass support rollers, the bent glass sheet bent to a predetermined shape can be supported by the surfaces of the many large-diameter rollers. Consequently, local deformation of the bent glass sheet during cooling of the bent glass sheet can be prevented, and also air cooling can be carried out efficiently over the whole area of the glass sheet, so that the bent glass sheet can be cooled well. By a heat-resistant material being provided on the surfaces of the large-diameter rollers, the occurrence of glass surface marks caused by contact with the rollers can be prevented and the durability of the large-diameter rollers are improved.

In the step of changing the curved shape of the bent glass sheet, preferably, the shape of the bent glass sheet is changed by air of different pressures blown to the upper and lower sides of the bent glass sheet. Because the cooling powers applied to the curved glass sheet can be adjusted with air pressures, the cooling powers can be adjusted with a relatively simple device.

Preferably, the step of bending the glass sheet to a predetermined shape includes providing a bending mold above the glass sheet and a heat-resistant belt between the bending mold and the glass sheet so that during its conveyance, the glass sheet is bent into the predetermined shape by pressing it together with the belt against bending mold. Because the glass sheet can be bent to a predetermined shape while being conveyed, it is unnecessary for the conveying of the glass sheet to be stopped. Therefore, the glass sheet can be bent to the predetermined shape with good efficiency.

When the gap T1 between the upper and lower curved support rollers of the upstream is given (t+α1), obtained by adding a first clearance α1 to the glass sheet thickness t, and the gap T2 of the downstream is made (t+α2), obtained by adding a second clearance α2 to the glass sheet thickness t, preferably, α1 is always smaller than α2.

When the curved glass sheet is quenched while being mechanically restrained glass shape by the upper and lower curved support rollers, the curving stress come to be developed uniformly over the entire area of the glass sheet and the curving stress acts to curve the bent glass sheet. Then, the bent glass sheet is going to curve deeper than, or shallower than, the shape of the curved support rollers. Thereby, though the glass sheet does not break, the curving force of the glass sheet becomes large, which deform the shape of the curved support rollers whereby the rotation of the rollers, for example, is interfered.

The gap between the upper and lower curved support rollers is given a first clearance α1 in the upstream part to make it larger than the glass sheet thickness t and is given a second clearance α2 in the downstream part. By accommodating a certain degree of deformation of the glass sheet and reducing curving stress developed in the glass sheet, it is possible to suppress deformation of the roller shapes.

Stiffness of the glass sheet is higher in the downstream part than in the upstream part. By setting the second clearance α2 of the downstream part to be larger than the first clearance α1 of the upstream part, it is possible to prevent breakage of the stiffened glass sheet more certainly, and also it is possible to prevent hindrance of the glass transportation occurred by conveyor rollers more certainly.

The first clearance α1 is preferably equal to or more than 0 mm and equal to or less than 3 mm (0 mm ≤ α1 ≤ 3 mm). When the first clearance α1 of the upstream part exceeds 3 mm, the gap between the upper and lower curved support rollers is too large, and there is a risk that the curved glass sheet floats up under the cooling air pressure or vibrates. This might cause small irregularities made by the upper and lower curved support rollers to arise in the glass surfaces. When a gap of the upper and lower curved support rollers is too large, there is a risk that the curved glass sheet slips with respect to the upper and lower curved support rollers and the conveying direction of the curved glass sheet changes. When the conveying direction of the curved glass sheet changes, the glass sheet deviates from its correct position with respect to the rollers, and for example when the conveying direction of the rear end of the curved glass sheet, which has not yet been quenched, changes, the curved shape of the bent glass sheet may deviate from the predetermined shape.

To avoid this, if the first clearance α1 is made 0 mm ≤ α1 ≤ 3 mm, optical reflective distortion and optical transmitted distortion of the curved tempered glass sheet can be better maintained, and deformation of the rear end of the curved tempered glass sheet can be eliminated.

Further, in the present invention, there is provided a curved tempered glass sheet manufacturing apparatus including a furnace for heating a glass sheet to near its softening temperature; a first or preliminary bending apparatus for bending the glass sheet heated in this furnace to a predetermined shape; and a quenching/further or secondary bending apparatus for changing the curved shape of the bent glass sheet by, while the bent glass sheet bent by the first bending apparatus is restrained in shape by a pair of a plurality of upper curved support rollers and a plurality of lower curved support rollers and conveyed in a substantially horizontal direction, quenching the bent glass sheet with different cooling powers being applied to its upper and lower surfaces.

The quenching/further bending apparatus is provided for changing the curved shape of a bent glass sheet by adjusting cooling powers after the glass sheet is bent to a predetermined shape by the preliminary bending apparatus. Consequently, it is not necessary for different forming molds to be prepared for each different shape of the curved tempered glass sheet as in the prior art.

Before the curved shape of the bent glass sheet is changed by quenching powers applied to the upper and lower glass surfaces being adjusted in the quenching/further bending apparatus, the glass sheet is bent to a certain depth by the first bending apparatus. By providing the first bending apparatus for bending the glass sheet to a predetermined shape and the quenching/secondary bending apparatus for changing the curved shape of the bent glass sheet with a difference in cooling powers, it is possible to form a glass sheet into a deep or shallow curved shape.

In the quenching/further bending apparatus the curved glass sheet is mechanically restrained in shape over its entire area as the glass sheet is quenched with different cooling powers being applied to its upper and lower surfaces. Because the bent glass sheet is mechanically restrained in shape over its entire area, it can be prevented from deforming locally, and a curving stress such that deformation will occur uniformly over the entire area is developed. After a curving stress is developed in the entire glass sheet, the glass sheet is released from the shape restraining, whereby the bent glass sheet is curved uniformly with the curving stress developed in the entire glass sheet.

The quenching/further bending apparatus preferably has quenching means for changing the curved shape of the bent glass sheet by air of different pressures blown to the upper and lower sides of the bent glass sheet. Because the cooling powers applied to the bent glass sheet can be adjusted with air pressures of quenching means, the cooling powers can be adjusted with relatively simple equipment.

The apparatus of the present invention preferably has gap adjusting means which, when the gap T1 between the upper and lower curved support rollers of the upstream is given (t+α1), obtained by adding a first clearance α1 to the glass sheet thickness t, and the gap T2 of the downstream is given (t+α2), obtained by adding a second clearance α2 to the glass sheet thickness t, is capable of adjusting to α1 < α2. By adjusting the gap between the upper and lower curved support rollers with gap adjusting means, in the upstream part it is given a first clearance α1 to make it larger than the glass sheet thickness t and in the downstream part it is given a second clearance α2. By accommodating a certain degree of deformation of the glass sheet and reducing the curving stress developed in the glass sheet, it is possible to suppress deformation of the roller shapes.

Stiffness of the glass sheet is higher in the downstream part than in the upstream part. By setting the second clearance α2 of the downstream part to be larger than the first clearance α1 of the upstream part, it is possible to prevent breakage of the stiffened glass sheet more certainly, and also it is possible to prevent hindrance of the glass transportation occurred by conveyor rollers more certainly.

### Brief Description of the Drawings

Certain preferred embodiments of the present invention will be described in detail below, by way of example only, with reference to the accompanying drawings, in which:
Fig. 1 is a perspective view of a curved tempered glass sheet manufactured according to any of several embodiments of the present invention;
Fig. 2 is a perspective view of a curved tempered glass sheet manufacturing apparatus according to a first embodiment of the present invention;
Fig. 3 is a side view of the manufacturing apparatus as shown in Fig. 2;
Fig. 4 is a cross-sectional view taken along line 4-4 of Fig. 3;
Figs. 5A and 5B are views showing a step of bending a heated glass sheet by a bending apparatus in a curved tempered glass sheet manufacturing method according to the first embodiment of the invention;
Figs. 6A and 6B are views showing that the curved glass sheet bent in the step shown in Fig. 5A is conveyed into between upper and lower curved support rollers for undergoing a quenching;
Figs. 7A and 7B are views showing a curved tempered glass sheet carried out of a quenching/further bending apparatus;
Fig. 8 is a side view of a curved tempered glass sheet manufacturing apparatus according to a second embodiment of the invention;
Figs. 9A and 9B are schematic views illustrating the apparatus in the second embodiment and the apparatus in the first embodiment, respectively, for the purpose of comparison;
Figs. 10A is a cross-sectional view taken along line 10A-10A of Fig. 8 and Fig. 10B is a cross-sectional view taken along line 10B-10B of Fig. 8;
Figs. 11A and 11B are views showing a step of conveying a curved glass sheet into an upstream part of a quenching/further bending apparatus in a curved tempered glass sheet manufacturing method according to the second embodiment of the invention;
Figs. 12A and 12B are views showing a step of conveying the curved glass sheet from the position of Fig. 11A to a downstream part;
Fig. 13, Figs. 14A and 14B, and Figs. 15A and 15B are views showing a curved tempered glass sheet manufacturing method according to a third embodiment of the present invention, with P1 set to be more than P2 in cooling the curved glass sheet, where P1 is an air pressure of air blown from above the curved glass sheet and P2 is an air pressure of air blown from below the curved glass sheet; and
Fig. 16, Fig. 17 and Fig. 18 are views showing a curved tempered glass sheet manufacturing apparatus according to a fourth embodiment of the invention, including a quenching/further bending apparatus pivotable up and down on an entrance thereof, and showing steps for manufacturing the tempered curved glass sheet according to the fourth embodiment.

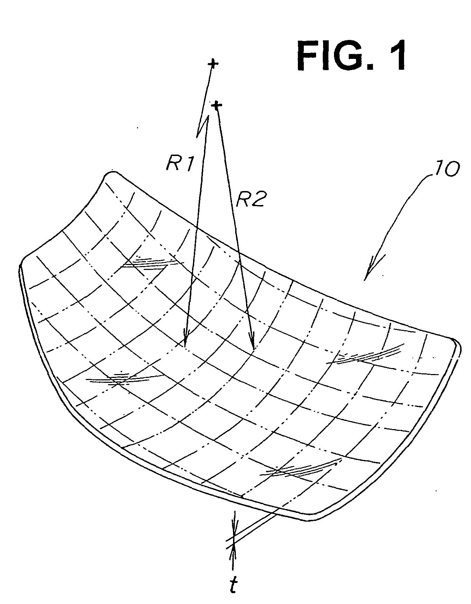

Fig. 1 shows a curved tempered glass sheet manufactured with a curved tempered glass sheet manufacturing apparatus according to a first embodiment of the invention. In the following, as a representative example of a curved tempered glass sheet, the example of a glass sheet curved in two directions will be described; however, the curved tempered glass sheet is not limited to this, and the invention may be applied to other curved glass sheets.

A double curvature glass sheet or two-directionally curved glass sheet shown as a representative example of a curved tempered glass sheet 10 has the same radius R1 of curvature in the longitudinal direction of the figure (a conveying direction) at any position on the glass, and has the same radius R2 of curvature in a width direction perpendicular to the longitudinal direction of the figure (a direction perpendicular to the conveying direction) at any position on the glass. The radius R1 is for example 30,000 mm and the radius R2 is for example 1,300 mm. The thickness t of the curved tempered glass sheet 10 is for example 3 to 4 mm.

This curved tempered glass sheet 10 can be applied for example to a side window glass (not shown) of an automobile.

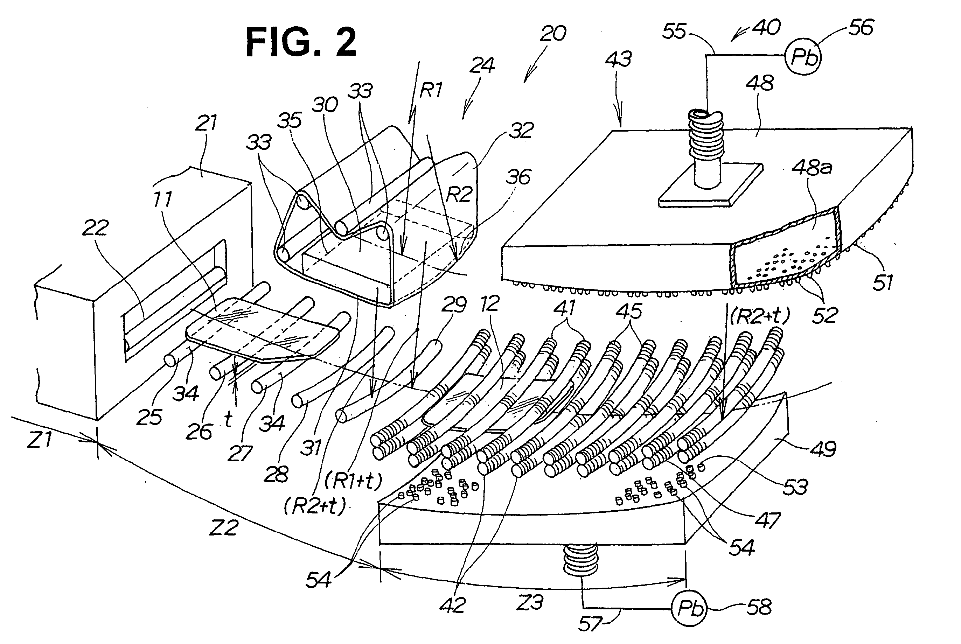

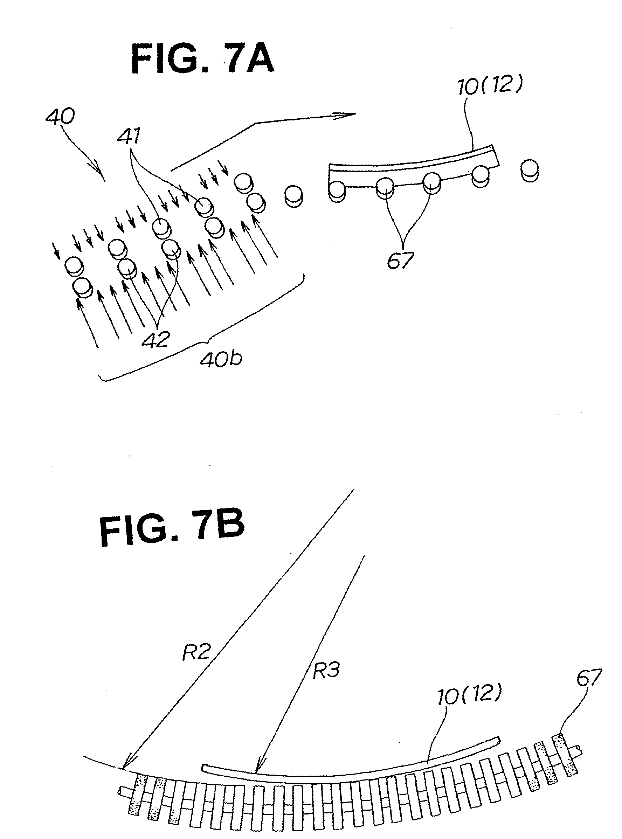

An apparatus and method for manufacturing a curved tempered glass sheet 10 according to a first embodiment of the present invention will now be described hereinbelow with reference to Fig. 2 thorough Fig. 7.

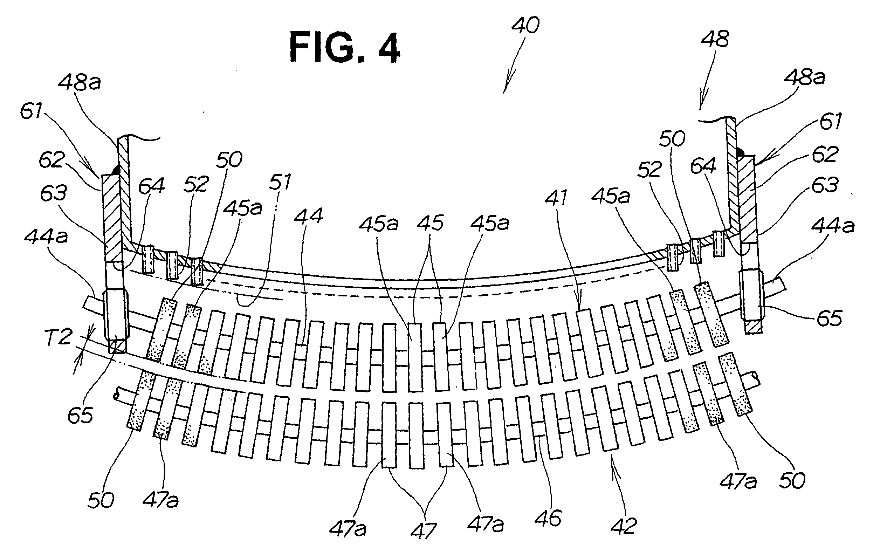

Referring to Fig. 2 and Fig. 4, there is shown a curved tempered glass sheet manufacturing apparatus according to the first embodiment of the present invention.

Referring to Fig. 2, the curved tempered glass sheet manufacturing apparatus 20 has a furnace 21 provided in a heating zone Z1, a bending apparatus 24 provided in a first or preliminary bending zone Z2 positioned downstream of the heating zone Z1, and a quenching/further bending apparatus 40 provided in a quenching/further or secondary bending zone Z3 positioned downstream of the first bending zone Z2.

The bending apparatus 24 provided downstream of the furnace 21 has a plurality of bending rollers, in this figure, first through fifth bending rollers 25 through 29. A bending mold 30 is disposed above these bending rollers 25 to 29. A heat-resistant belt 32 passes along a bending surface 31 of the bending mold 30 and forms an endless loop. Plural tension rollers 33 apply a tension to the heat-resistant belt 32. The endless heat-resistant belt 32 is made to face the bending rollers 25 to 29 across a predetermined gap while in contact with the bending surface 31.

The first through fifth bending rollers 25 - 29 are disposed with a predetermined gap in the conveying direction, and with progress from upstream to downstream the curvature of the rollers 25 to 29 in their axial direction gradually increases. Specifically, the furthest upstream of the first through fifth bending rollers 25 through 29, the first bending roller 25, is a straight roller, and the furthest downstream, the fifth bending roller 29, is a circular arc roller of radius (R2+t). The second through fourth bending rollers 26 through 28 disposed between the first bending roller 25 and the fifth bending roller 29 have axial curvatures gradually increasing with progress from upstream to downstream. The centers of these bending rollers 25 to 29 are disposed along a circular arc of radius (R1+t).

Although in this embodiment an example wherein the fifth bending roller 29 forms a circular arc of radius (R2+t) has been described, the curvature of the fifth bending roller 29 is not limited to this circular arc, and may be any convexly curving shape.

These first through fifth bending rollers 25 through 29 are each made up of a roller shaft (not shown) curved to a predetermined shape and a tubular sleeve 34 covering an outer periphery of the roller shaft. The sleeve 34 is connected to a rotary driving apparatus (not shown), and can be rotated by the same. Each of the sleeves 34 has an outer periphery to contact a glass sheet 11 and the outer periphery is covered with a heat-resistant material.

The bending mold 30 is an approximately rectangular body having the bending surface 31 as its bottom side. This bending surface 31 has its upstream front edge 35 forming a straight line and its downstream rear edge 36 forming a circular arc of radius R2. The curvature of the bending surface 31 in the direction perpendicular to the conveying direction gradually increases with progress from the upstream front edge 35 toward the downstream rear edge 36. The center of the bending surface 31 forms a circular arc of radius R1 in the conveying direction.

The bending rollers 25 to 29 are disposed on a conveyance path taking the form of a circular arc of radius (R1+t). Because the bending surface 31 is formed on a circular arc of radius R1, a gap t equal to the glass sheet thickness t is formed between the bending mold 30 and the bending rollers 25 to 29.

Although in this embodiment an example wherein the rear edge 36 of the bending surface 31 forms a circular arc of radius R2 has been described, the shape of the bending surface 31 is not limited to a circular arc and may be any convexly curving shape.

The heat-resistant belt 32 forming an endless loop makes contact with this bending surface 31, and a tension is suitably applied to this heat-resistant belt 32 by the tension rollers 33. At least one of the tension rollers 33 is connected to a drive source (not shown) to circulate the heat-resistant belt 32. As the heat-resistant belt 32 and each of the bending rollers 25 through 29 convey the glass sheet 11 while sandwiching the glass sheet 11 therebetween, the glass sheet 11 can be bent to a predetermined shape during its carries.

The quenching/further bending apparatus 40 is provided downstream of the bending apparatus 24. This quenching/further bending apparatus 40 has a plurality of upper curved support rollers 41 and a plurality of lower curved support rollers 42 for restraining the shape of the upper and lower surfaces of a curved glass sheet 12 bent to a predetermined shape by the bending apparatus 24. Quenching means 43 quenches the curved glass sheet 12 as the curved glass sheet 12 is conveyed by the upper and lower curved support rollers 41, 42. The sheet thickness of the glass sheet 11 and the curved glass sheet 12 is t.

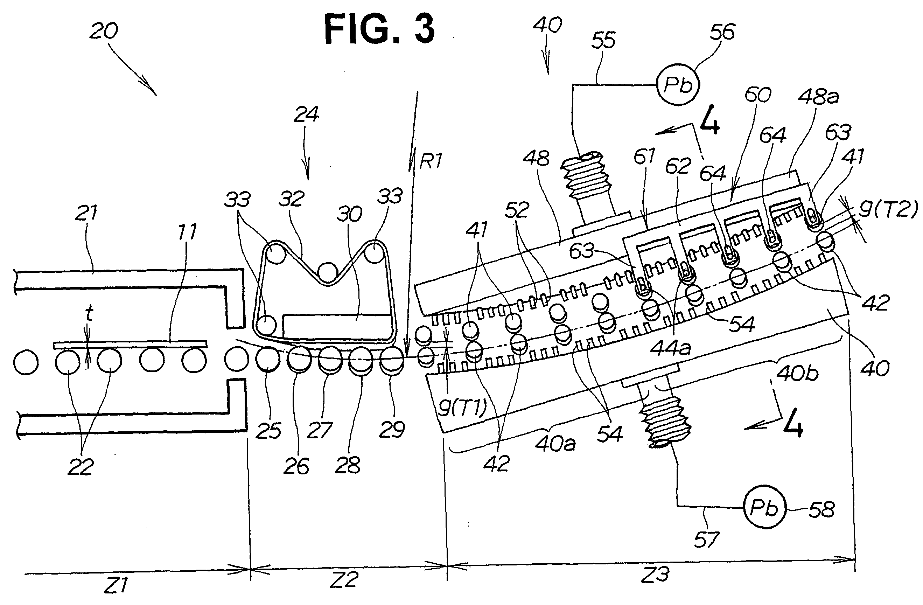

The conveying surface defined by the lower curved support rollers 42 is disposed on a circular arc of radius (R1+t). The conveying surface defined by the upper curved support rollers 41 is disposed on a circular arc of radius {(R1+t)-g}. The surface of the lower curved support rollers 42 perpendicular to the conveying direction (the surface extending in a width direction) is made in the form of a circular arc of radius (R2+t). The surface of the upper curved support rollers 41 perpendicular to the conveying direction (the surface extending in a width direction) is made in the form of a circular arc of radius {(R2+t)-g}. That is, a gap g is formed between the upper curved support rollers 41 and the lower curved support rollers 42. This gap g will be discussed in detail in connection with Fig. 3.

Although in this embodiment an example has been described wherein the surface of the upper curved support rollers 41 in the width direction is on a circular arc of radius {(R2+t)-g} and the surface of the lower curved support rollers 42 in the width direction is on a circular arc of radius (R2+t), the surface of each of the upper and lower curved support rollers 41, 42 in the width direction do not have to be on circular arcs, and may be of any convexly curving shape.

The upper curved support rollers 41 are each made up of a rotating shaft 44 (see Fig. 4) curved to a predetermined shape, numerous ring rollers (large-diameter rollers) 45 arranged on the rotating shaft 44 with a predetermined gap, and cushioning heat-resistant members 50 provided on the surfaces 45a of these large-diameter rollers 45. The large-diameter rollers 45 are connected to a driving mechanism (not shown) and rotated by the same.

The lower curved support rollers 42 are each made up of a rotating shaft 46 (see Fig. 4) curved to a predetermined shape, numerous ring rollers (large-diameter rollers) 47 arranged on the rotating shaft 46 with a predetermined gap, and cushioning heat-resistant members 50 provided on the surfaces 47a of these large-diameter rollers 47. The large-diameter rollers 47 are connected to a driving mechanism (not shown) and rotated by the same.

The quenching means 43 has an upper cooling box 48 disposed above the upper curved support rollers 41 and a lower cooling box 49 disposed below the lower curved support rollers 42.

The upper cooling box 48 for example has at its lower part a convexly curved air delivery surface (or a convexly curved air jet surface) 51. Specifically, the air jet surface 51 is formed with a plurality of air nozzles 52 and is provided a predetermined gap away from the curved glass sheet 12 and not in contact therewith.

The lower cooling box 49 for example has at its upper part a concavely curved air delivery surface (or a concavely curved air jet surface) 53. Specifically, the air jet surface 53 is formed with a plurality of air nozzles 54 and is provided a predetermined gap away from the curved glass sheet 12 and not in contact therewith.

An upper air supply pump 56 is connected to the upper cooling box 48 by an air supply passage 55. The air nozzles 52 are connected to the air supply pump 56 by way of the hollow interior 48a of the upper cooling box 48 and the air supply passage 55.

A lower air supply pump 58 is connected to the lower cooling box 49 by an air supply passage 57. The air nozzles 54 are connected to the lower air supply pump 58 by way of the hollow interior (not shown) of the lower cooling box 49 and the air supply passage 57.

As a result, the curved glass sheet 12 can be quenched by the upper and lower air supply pumps 56, 58 being driven to cause air to jet through the upper and lower nozzles 52, 54 toward the upper and lower surfaces of the curved glass sheet 12.

Because the upper and lower air supply pumps 56, 58 are provided independently, by independently adjusting the amounts of air jetting from the upper and lower air supply pumps 56, 58 it is possible to independently adjust the air jet pressures (air pressures) of the upper and lower air nozzles 52, 54.

As discussed above, because the quenching means 43 is designed to adjust the respective air pressures of the upper and lower air nozzles 52, 54, the curved glass sheet 12 can be quenched with different cooling powers being applied to its upper and lower surfaces.

At this time, as a result of the numerous large-diameter rollers 45 being provided on the rotating shafts of the upper curved support rollers 41 and the numerous large-diameter rollers 47 being provided on the rotating shafts of the lower curved support rollers 42, the curved glass sheet 12 bent to a predetermined shape can be supported and restrained in shape by the surfaces of the many large-diameter rollers 45, 47. Consequently, during cooling or quenching of the curved glass sheet 12, local deformation of the curved glass sheet 12 can be prevented, and also air can be blown efficiently over the whole area of the curved glass sheet 12, so that the curved glass sheet 12 can be cooled well.

By providing heat-resistant members 50 of, for example, an aramide fiber textile or fiber form such as felt to the surfaces of the large-diameter rollers 45, 47, the occurrence of transfer marks caused by contact with the surface of the curved glass sheet 12 can be prevented. Also, the durability of the large-diameter rollers 45, 47 can be increased.

Referring to Fig. 3, the furnace 21 has a plurality of conveying rollers 22 for conveying a glass sheet 11 horizontally inside the furnace 21. The furnace 21 heats the glass sheet 11 being carried by the conveying rollers 22 to near its softening temperature.

In the bending apparatus 24, by the glass sheet 11 (sheet thickness t) heated to near its softening temperature in the furnace 21 being sandwiched while carried by the first through fifth bending rollers 25 through 29 and the heat-resistant belt 32, the heated glass sheet 11 can be bent to a predetermined shape.

In the quenching/further bending apparatus 40, while the upper and lower surfaces of the curved glass sheet 12 (see Fig. 2) bent to a predetermined shape by the bending apparatus 24 are being restrained by the upper and lower curved support rollers 41, 42, the curved glass sheet 12 can be quenched with different cooling powers being applied to its upper and lower surfaces.

The quenching/further bending apparatus 40 includes an upstream part 40a and a downstream part 40b. The gap g between the upper and lower curved support rollers 41, 42 disposed in the upstream part 40a is set to a predetermined gap T1. The gap g between the upper and lower curved support rollers 41, 42 disposed in the downstream part 40b is set to a predetermined gap T2. That is the gap g between the upper and lower curved support rollers 41, 42 is the predetermined gap T1 in the upstream part 40a and is the predetermined gap T2 in the downstream part 40b. The upper curved support rollers 41 in the downstream part 40b are supported vertically movably by gap adjusting means 60.

The gap adjusting means 60 has bases 62, 62 of left and right supporting members 61, 61 attached respectively to left and right side walls 48a, 48a (the back one 48a is shown in Fig. 4) of the upper cooling box 48. The left and right bases 62, 62 have a plurality of leg parts 63 extending downward therefrom. Each leg part 63 has a slot 64 formed in a lower end thereof. The left and right ends 44a, 44a of the rotating shafts 44 of the upper curved support rollers 41 are fitted in the slots 64. The upper curved support rollers 41 is supported by raising/lowering mechanisms (not shown) such as ball screws in such a manner that the rollers 41 can be raised and lowered.

As shown in Fig. 4, the left and right ends 44a, 44a of the rotating shafts 44 are raise/lowerably supported through bearings 65 in the slots 64 formed in the leg parts 63 of the bases 62, 62. As a result, by raising and lowering the rotating shafts 44 with the raising/lowering mechanism not shown in the drawings, the gap T2 between the upper and lower curved support rollers 41, 42 can be freely altered.

Although in this embodiment an example has been described wherein the gap T2 between the upper and lower curved support rollers 41, 42 is adjusted by raising/lowering each of the rotating shafts 44 in the slots 64, 64, the invention is not limited to this example, and it is also possible for the rotating shafts 44 to be raised/lowered together by the left and right supporting members 61 being raised/lowered. As shown in Fig. 3, the gap T1 between the upper and lower curved support rollers 41, 42 in the upstream part 40a is made the same as the gap T2 between the upper and lower curved support rollers 41, 42 in the downstream part 40b (T1=T2), and the gap T1 and the gap T2 are set to the thickness t of the curved glass sheet 12 (see Fig. 2) plus the first clearance α1 (t+α1). The first clearance α1 is made 0 mm ≤ α1 ≤ 3 mm.

When the first clearance α1 exceeds 3mm, there is a risk that the curved glass sheet 12 is floated up under the cooling air pressure or vibrates, and thereby small irregularities made by the upper and lower curved support rollers 41, 42 arises in the glass surfaces, and deterioration of reflectivity distortion and transparency distortion occurs. In some cases, there is also a risk that the upper and lower curved support rollers 41, 42 slip relative to the curved glass sheet 12 and the conveying direction of the curved glass sheet 12 changes, and thereby the rear end of the curved glass sheet 12, which has not yet been quenched, may deviate from the conveying path and provide a shape different from a predetermined one.

To avoid this, by setting the first clearance α1 to 0 mm ≤ α1 ≤ 3 mm, reflectivity distortion and transparency distortion of the curved glass sheet 12 can be suppressed, and undesirable deformation of the rear end of the curved glass sheet 12 can be eliminated.

Next, an example wherein the curved tempered glass sheet manufacturing method according to the first embodiment is applied to a glass sheet 11 of thickness t less than 4 mm will be described, on the basis of Fig. 3 and Fig. 5A through Fig. 7B.

First, the gap T2 between the upper and lower curved support rollers 41, 42 in the downstream part 40b is adjusted to the same as the gap T1 between the upper and lower curved support rollers 41, 42 in the upstream part 40a, that is, to T1=T2. In this state, the glass sheet 11 inside the furnace 21 shown in Fig. 3 is heated to near its softening temperature while being carried by the conveying rollers 22. This heated glass sheet 11 is carried toward the first through fifth bending rollers 25 through 29 of the bending apparatus 24.

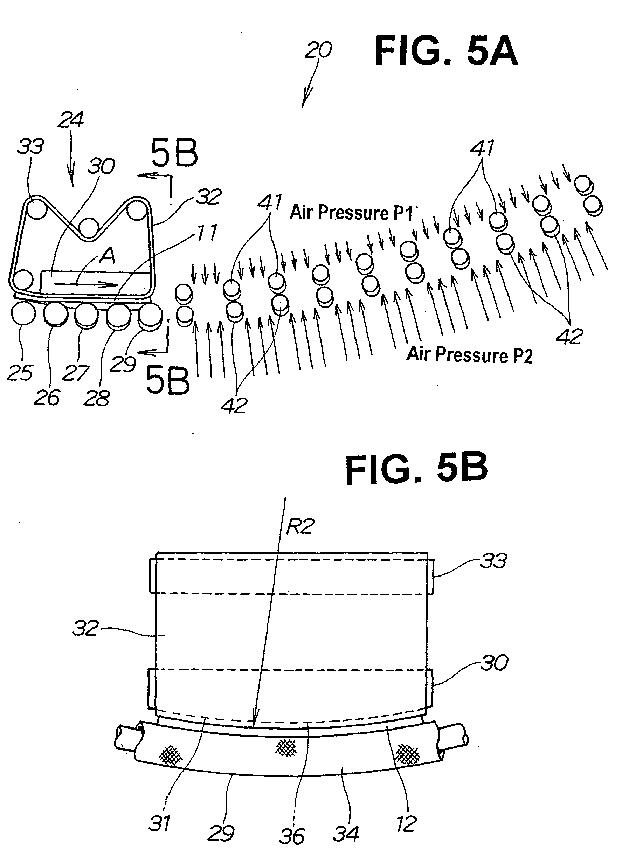

In Fig. 5A, the glass sheet 11 heated to near its softening temperature is sandwiched while being carried as shown by the arrow Aby the first through fifth bending rollers 25 through 29 and the heat-resistant belt 32 of the bending apparatus 24.

As shown in Fig. 5B, by being sandwiched while carried by the first through fifth bending rollers 25 through 29 (only the bending roller 29 is shown in this figure) and the heat-resistant belt 32, the heated glass sheet 11 can be bent to a predetermined shape of radius R2 (1,300 mm) to form a curved glass sheet 12.

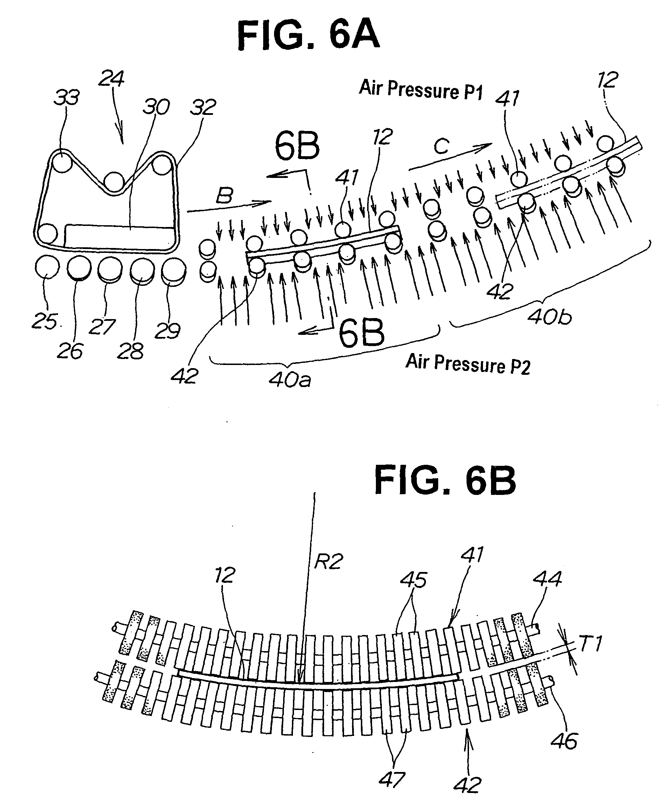

In Fig. 6A, the curved glass sheet 12 bent to the predetermined shape is carried out from the bending apparatus 24 and conveyed into between the upper and lower curved support rollers 41, 42 of the quenching/further bending apparatus 40, as shown by the arrow B.

The jet pressure (air pressure) of the air blown or jetted from the many air nozzles 52 (see Fig. 3) of the upper cooling box 48 will be written P1, and the jet pressure (air pressure) of the air blown or jetted from the many air nozzles 54 of the lower cooling box 49 will be written P2. The relationship between the air pressures P1 and P2 is P1 < P2. It is thus possible to make the cooling power applied to the lower surface of the curved glass sheet 12 bent to the predetermined shape larger than the cooling power applied to the upper surface, and effect quenching with a difference between the cooling powers applied to the upper and lower surfaces of the curved glass sheet 12.

In Fig. 6B, during the quenching of the upper and lower surfaces of the curved glass sheet 12 with different cooling powers, the curved glass sheet 12 is restrained in shape by the upper and lower curved support rollers 41, 42. Consequently, the curved glass sheet 12 can be prevented from deforming locally, and a curving stress such that deformation will occur uniformly over the entire area of the curved glass sheet 12 after cooling is developed therein.

The gap T1 between the upper and lower curved support rollers 41, 42 in the upstream part 40a shown in Fig. 6A and the gap T2 between the upper and lower curved support rollers 41, 42 in the downstream part 40b are set the same. The gap T1 and the gap T2 are set to the thickness t of the curved glass sheet 12 plus the first clearance α1 (t+α1), and the first clearance α1 is set to 0 mm ≤ α1 ≤ 3 mm.

By setting the first clearance α1 to 0 mm ≤ α1 ≤ 3 mm, it is possible to suppress reflectivity distortion and transparency distortion of the curved tempered glass sheet 10 (see Fig. 1) and also to eliminate undesirable deformation of the rear end of the curved tempered glass sheet 10.

As shown in Fig. 6A, the curved glass sheet 12 is carried, as shown by the arrow C, from the position as shown by solid lines (the upstream part 40a) to the position shown by phantom lines (the downstream part 40b), and then carried out from the upper and lower curved support rollers 41, 42 of the downstream part 40b onto conveying rollers.

In Fig. 7A, the curved glass sheet 12 is carried out from the downstream part 40b of the quenching/further bending apparatus 40 as shown by an arrow onto conveying rollers 67, and the restraining of the curved glass sheet 12 by the upper and lower curved support rollers 41, 42 is thus ended. The curved glass sheet 12 can be curved by a curving stress developed in the entire area of the glass of the curved glass sheet 12.

In Fig. 7B, by the curved glass sheet 12 being curved with a curving stress developed in the entire area of the glass of the curved glass sheet 12, the curved glass sheet 12 can be turned into a curved tempered glass sheet 10 matched to the desired design shape over the whole area of the glass.

Specifically, because the cooling power applied to the lower surface of the curved glass sheet is made larger than the cooling power applied to the upper surface, as described above, the curved tempered glass sheet 10 can be brought to a small curvature radius R3 (1,100 mm), and the curvature radius R3 can thus be made smaller than the radius R2 (1,300 mm). That is, by means of the quenching/further bending apparatus 40, the curved glass sheet 12 can be curved more deeply to make a curved tempered glass sheet 10 matched to the desired design shape over the whole area of the glass.

Next, a variation of the first embodiment will be described.

Whereas in the first embodiment an example has been described wherein the relationship between the upper side air pressure P1 and the lower side air pressure P2 is made P1 < P2 and the cooling power applied to the lower surface of the curved glass sheet 12 is thereby made larger, in this variation an example will be described wherein the relationship between the upper side air pressure P1 and the lower side air pressure P2 is made P1 > P2 and the cooling power applied to the upper surface of the curved glass sheet 12 is made larger.

That is, by implementing the same steps as those of the manufacturing method of the first embodiment described above with P1 > P2 set and the cooling power applied to the upper surface of the curved glass sheet 12 thus made larger, the curved tempered glass sheet 10 can be brought to a large radius of curvature (1,600 mm) and the radius of curvature can thus be made larger than the radius R2 (1,300 mm).

By means of the quenching/further bending apparatus 40, the curved glass sheet 12 can be curved so that its curvature becomes small, and a curved tempered glass sheet 10 matched to the desired design shape over the whole area of the glass can be obtained.

As described above, with the curved tempered glass sheet manufacturing method of the first embodiment, by making different the cooling powers applied to the upper and lower surfaces of the curved glass sheet 12, from the curved glass sheet 12 (sheet thickness t: less than 3 mm, radius R2: 1,300 mm) it is possible to obtain a curved tempered glass sheet 10 having had its radius of curvature changed to between 1,100 and 1,600 mm.

In the first embodiment, after the glass sheet 11 is bent into a curved glass sheet 12 of predetermined shape, the curved glass sheet 12 bent to the predetermined shape can be formed to a further predetermined curved shape by degrees or levels of cooling being adjusted. Consequently, it is not necessary for different forming molds to be prepared for each different shape of curved tempered glass sheet as in the prior art.

During the quenching of the upper and lower surfaces of the curved glass sheet 12 with different cooling powers, the curved glass sheet 12 is restrained in shape. Consequently, the curved glass sheet 12 is prevented from deforming locally, and a curving stress such that deformation will occur uniformly over the entire area of the curved glass sheet 12 after cooling is developed therein.

After a curving stress is developed in the entire area of the curved glass sheet 12, the glass sheet is released from the shape-restraining to allow the glass sheet 12 to be bent further with the curving stress generated across the entire area of the glass sheet. This makes it possible to conform the curved glass sheet to a predetermined or desired design shape over the whole area of the glass sheet.

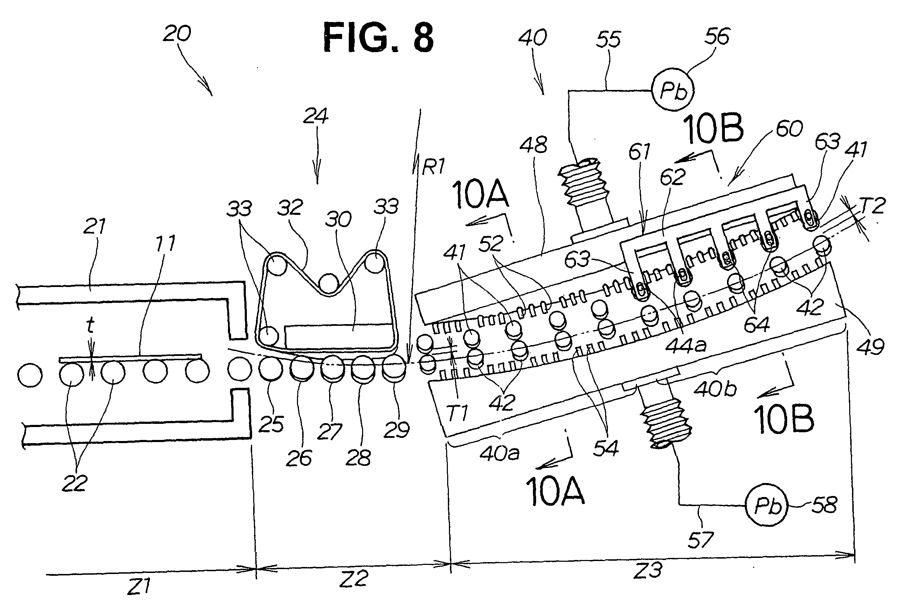

Next, second through fifth embodiments will be described, with reference to Fig. 8 through Fig. 18. Parts in these second through fourth embodiments the same as parts in the first embodiment have been given the same reference numerals and will not be explained again.

Fig. 8 shows a curved tempered glass sheet manufacturing apparatus 20 according to a second embodiment of the present invention.

The curved tempered glass sheet manufacturing apparatus 20 of the second embodiment as shown in Fig. 8 differs from that of the first embodiment only in that the gap T2 between the upper and lower curved support rollers 41, 42 in the downstream part 40b of the quenching/further bending apparatus 40 is made larger than the gap T1 between the upper and lower curved support rollers 41, 42 in the upstream part 40a, that is, in that T1 < T2 is set, and the rest of its construction is the same as the first embodiment.

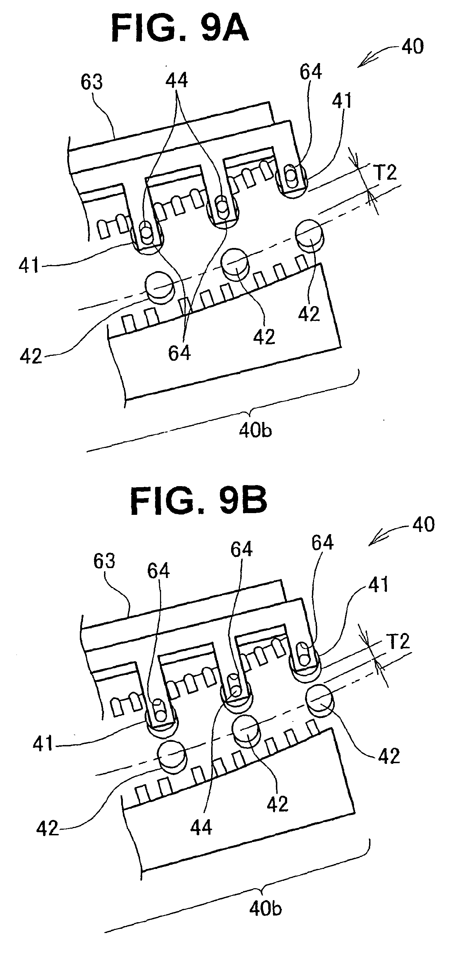

The difference between the first embodiment and the second embodiment will be explained in detail with reference to Figs. 9A and 9B. Fig. 9A shows the downstream part 40b of the quenching/further bending apparatus 40 according to the second embodiment while Fig. 9B shows the downstream part 40b of the quenching/further bending apparatus 40 according to the first embodiment.

In Fig. 9A, the rotating shafts 44 of the upper curved support rollers 41 in the downstream part 40b of the quenching/further bending apparatus 40 have been raised by raising/lowering mechanisms such as ball screws (not shown) to the tops of the slots 64. Thus, the upper curved support rollers 41 in the downstream part 40b can be positioned high, and the gap T2 between the upper and lower curved support rollers 41, 42 in the downstream part 40b can be made large. Consequently, the relationship between the gap T2 between the upper and lower curved support rollers 41, 42 in the downstream part 40b and the gap T1 (see Fig. 8) between the upper and lower curved support rollers 41, 42 in the upstream part 40a can be made T1 < T2.

In Fig. 9B, the rotating shafts 44 of the upper curved support rollers 41 in the downstream part 40b of the quenching/further bending apparatus 40 are positioned at the bottoms of the slots 64, and the gap T2 between the upper and lower curved support rollers 41, 42 in the downstream part 40b of the mechanism 40 in the first embodiment is smaller than in the second embodiment. The relationship between the gap T1 between the upper and lower curved support rollers 41, 42 in the upstream part 40a and the gap T2 (shown in Fig. 8) between the upper and lower curved support rollers 41, 42 in the downstream part 40b is kept at T1=T2.

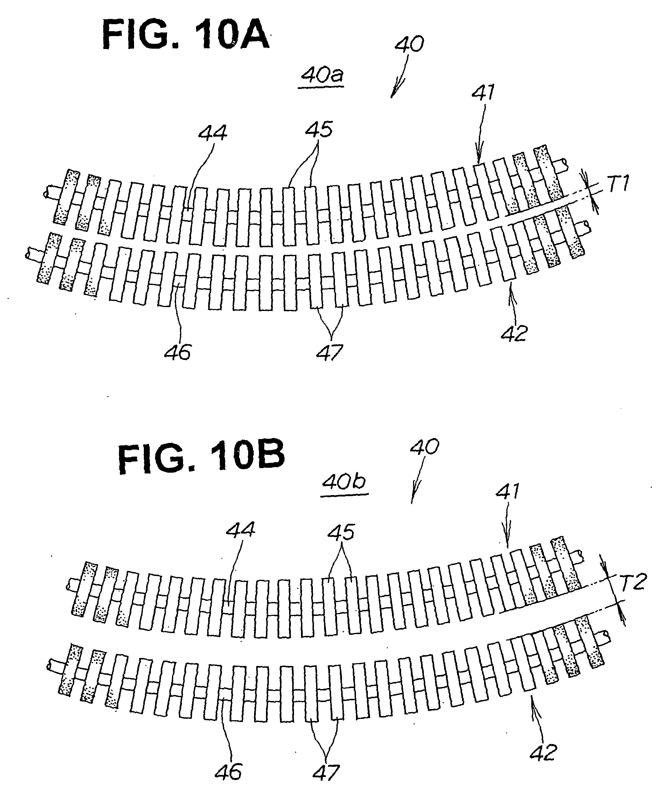

Figs. 10A and 10B show the upstream part 40a and the downstream part 40b, respectively, of the quenching/further bending apparatu 40 of Fig. 8 according to the second embodiment.

As shown in Fig. 10A, between the upper and lower curved support rollers 41, 42 in the upstream part 40a of the quenching/further bending apparatus 40 is provided the gap T1. The gap T1, as in the first embodiment, is made the thickness t of the curved glass sheet 12 plus the first clearance α1 (t+α1), and the first clearance α1 is made 0 mm ≤ α1 ≤ 3 mm.

By setting the first clearance α1 to 0 mm ≤ α1 ≤ 3 mm, as in the first embodiment, it is possible to suppress reflectivity distortion and transparency distortion of the curved tempered glass sheet 10 of Fig. 1 and also to eliminate undesirable deformation of the rear end of the curved tempered glass sheet 10.

As shown in Fig. 10B, between the upper and lower curved support rollers 41, 42 in the downstream part 40b of the quenching/further bending apparatus 40 is provided the gap T2. The gap T2 is made the thickness t of the curved glass sheet 12 plus the second clearance α2 (t+α2), and the relationship between the first clearance α1 and the second clearance α2 is expressed by α1 < α2.

The reason for making α1 < α2 (T1 < T2) is as follows.

When different upper and lower cooling powers are used to curve a curved glass sheet 12 to a shape different from the shape of the upper and lower curved support rollers 41, 42, during the cooling the curved glass sheet 12 tries to curve to deeper or shallower than the upper and lower curved support rollers 41, 42. However, because the curved glass sheet 12 is restrained in shape by the upper and lower curved support rollers 41, 42, the curved glass sheet 12 cannot curve, and a curving stress arises in the curved glass sheet 12.

When the curving stress arising in the curved glass sheet 12 exceeds the strength of the glass, the curved glass sheet 12 breaks. This tendency appears more markedly the thicker is the sheet thickness of the curved glass sheet 12, the larger is the additional curvature of the curved glass sheet 12, and the larger are the dimensions of the curved glass sheet 12. When the thickness t of the curved glass sheet 12 is thick, even if the curved glass sheet 12 does not break, because the curving force of the curved glass sheet 12 becomes large, it deforms the upper and lower curved support rollers 41, 42 and this causes hindrance to the rotation of the upper and lower curved support rollers 41, 42.

To avoid this, between the upper and lower curved support rollers 41, 42, by the second clearance α2 part of the gap T2 of the downstream part 40b being made larger than the first clearance α1 part of the gap T1 of the upstream part 40a, a certain amount of deformation of the curved glass sheet 12 is accommodated, so that the force tending to curve the curved glass sheet 12 is reduced It is thus possible to prevent breaking of the curved glass sheet 12 and hindrance of the conveying of the curved glass sheet 12.

Even when the gap T2 between the upper and lower curved support rollers 41, 42 is made large in the downstream part 40b, it is possible to match a curved tempered glass sheet 10 of a predetermined shape to the desired design shape over the whole area of the glass.

Next, an example wherein the curved tempered glass sheet manufacturing method of the second embodiment is applied to a glass sheet 11 whose sheet thickness t is over 4mm will be described, on the basis of Fig. 8 and Figs. 11A through 12B.

First, the gap T2 between the upper and lower curved support rollers 41, 42 in the downstream part 40b shown in Fig. 8 is made larger than the gap T1 between the upper and lower curved support rollers 41, 42 in the upstream part 40a, so that T1 < T2.

In this state, the glass sheet 11 inside the furnace 21 is heated to near its softening temperature while being carried by the conveying rollers 22. This heated glass sheet 11 is carried toward the first through fifth bending rollers 25 through 29 of the bending apparatus 24.

The heated glass sheet 11 is sandwiched while being carried downstream by the first through fifth bending rollers 25 through 29 and the heat-resistant belt 32 of the bending apparatus 24, as shown in Fig. 5A.

By being sandwiched while carried by the first through fifth bending rollers 25 through 29 and the heat-resistant belt 32, as shown in Fig. 5B, the glass sheet 11 can be bent into a curved glass sheet 12 of a predetermined curved shape of radius R2 (1,300 mm).

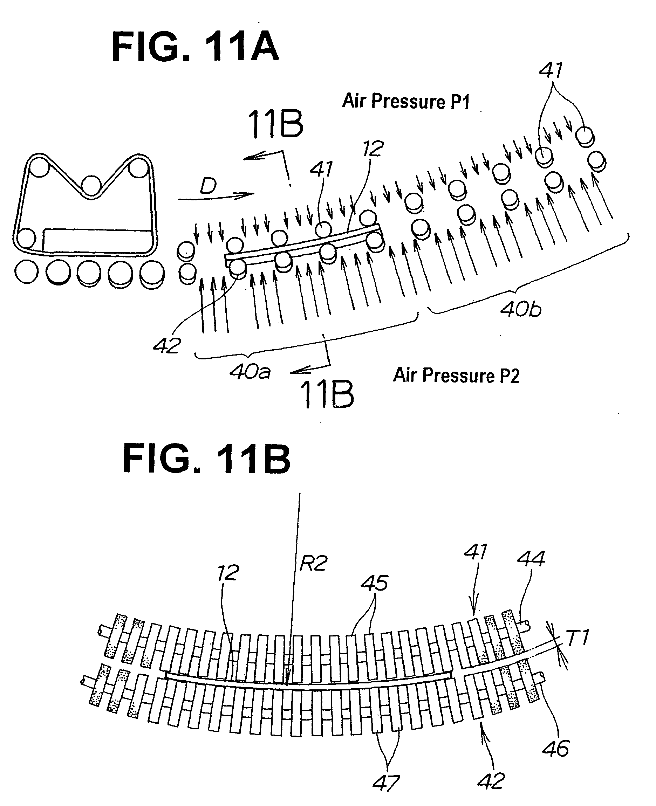

In Fig. 11A, the curved glass sheet 12 bent to the predetermined shape is carried out from the bending apparatus 24 and entered into between the upper and lower curved support rollers 41, 42 of the quenching/further bending apparatus 40 as shown by the arrow D.

The jet pressure (air pressure) P 1 of the air blown or jetted from the many air nozzles 52 of the upper cooling box 48 (see Fig. 8) will be written P1 and the jet pressure (air pressure) P2 of the air blown or jetted from the many air nozzles 54 of the lower cooling box 49 (see Fig. 8) will be written P2. The relationship between the air pressures P1 and P2 is P1 < P2. Thus, the cooling power on the lower surface side of the curved glass sheet 12 bent to a predetermined shape can be made larger than the cooling power on the upper surface side, and quenching can thus be carried out with different cooling powers applied to the upper and lower surfaces of the curved glass sheet 12.

In Fig. 11B, during the quenching with different cooling powers being applied to the upper and lower sides of the curved glass sheet 12, the curved glass sheet 12 is restrained by the upper and lower curved support rollers 41, 42. Consequently, during the quenching of the curved glass sheet 12 the curved glass sheet 12 is prevented from deforming as each portion of it is quenched, and a curving stress is generated in over the entire area of the glass sheet 12.

The gap T1 between the upper and lower curved support rollers 41, 42 in the upstream part 40a is set to the thickness t of the curved glass sheet 12 plus the first clearance α1 (t+α1), and the first clearance α1 is set to 0 mm ≤α1 ≤3 mm. By setting the first clearance α1 to 0 mm ≤ α1 ≤ 3 mm, it is possible to suppress reflectivity distortion and transparency distortion of the curved tempered glass sheet 10, and also to eliminate undesirable deformation of the rear end of the curved tempered glass sheet 10.

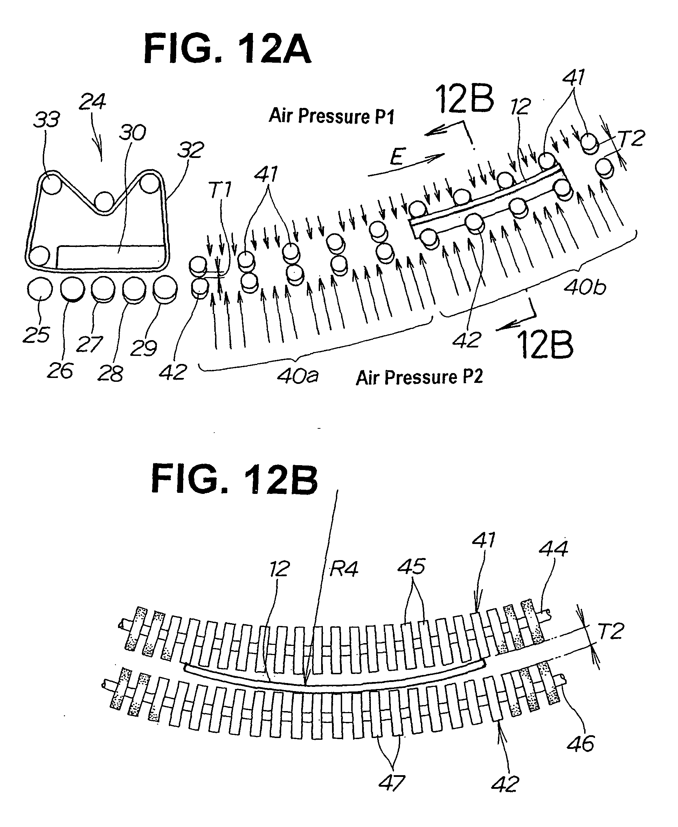

As shown in Fig. 12A, the curved glass sheet 12 is carried from the upstream part 40a to the downstream part 40b as shown by the arrow E. The gap T2 between the upper and lower curved support rollers 41, 42 in the down- stream part 40b of the quenching/further bending apparatus 40 is the thickness t of the curved glass sheet 12 plus the second clearance α2 (t+α2), and the relationship between the first clearance α1 and the second clearance α2 is expressed by α1 < α2.

In Fig. 12B, by α1 < α2, i.e. T1 < T2, being set, the gap T2 between the upper and lower curved support rollers 41, 42 is made large. Thus, by accommodating a certain amount of deformation of the curved glass sheet 12 and allowing residual curving stress in the curved glass sheet 12 to dissipate to some extent, breaking of the curved glass sheet 12 and hindrance of the conveyance of the curved glass sheet 12 can be prevented.

Because as mentioned above the cooling power on the lower side is made larger than the cooling power on the upper side, the radius of curvature R4 of the curved glass sheet 12 becomes small and its curvature becomes deep.

As shown in Fig. 12A, the curved glass sheet 12 is carried out from the upper and lower curved support rollers 41, 42 in the downstream part 40b onto conveying rollers 67 (see Fig. 7A) disposed downstream of the quenching/further bending apparatus 40. As a result of the curved glass sheet 12 being carried out onto the conveying rollers 67, the restraining of the curved glass sheet 12 by the upper and lower curved support rollers 41, 42 ends completely. Consequently, the curved glass sheet 12 can curve under the curving stress developed in the entire glass area of the curved glass sheet 12. Thus, the tempered glass 12 can be made a curved tempered glass sheet 10 matched to the desired design shape over the whole area of the glass, as shown in Fig. 7B.

Specifically, because as described above the cooling power on the lower side of the curved glass sheet is made larger than the cooling power on the upper side, the radius of curvature of the curved tempered glass sheet 10 can be made a small radius of curvature R3 (1,100mm) smaller than the radius R2 (1,300 mm). That is, by means of the quenching/further bending apparatus 40, the curved glass sheet 12 can be further sharply curved to form a curved tempered glass sheet 10 matched to a desired design shape over the whole area of the glass.

In the case of the second embodiment also, a curved tempered glass sheet 10 which is of a predetermined shape can be matched to a desired design shape over the whole area of the glass.

As described above, in the second embodiment also, the same effects as those of the first embodiment can be obtained.

Additionally, with the second embodiment, the relationship between the gap T1 between the upper and lower curved support rollers 41, 42 in the upstream part 40a and the gap T2 between the upper and lower curved support rollers 41, 42 in the downstream part 40b is made T1 < T2. Thus, even when the sheet thickness of the curved glass sheet 12 is thick, when the additional curvature of the curved glass sheet 12 is large, or when the dimensions of the curved glass sheet 12 are large, the curved glass sheet 12 can be prevented from breaking during cooling.

When the sheet thickness t of the curved glass sheet 12 is thick, although it is conceivable that the curving force of the curved glass sheet 12 will be large and that this will lead to hindrance of the rotation of the upper and lower curved support rollers 41, 42, by the relationship between the gap T1 and the gap T2 being made T1 < T2, this problem can also be eliminated.

Description will be made with reference to Fig. 8 and Fig. 13 to Fig. 15B as to a method for manufacturing a curved tempered glass sheet according to a third embodiment of the present invention. The third embodiment differs from the second embodiment only in the point that the relationship between the upper side air jet pressure P1 and the lower side air jet pressure P2 is made P1 > P2, and the rest of its construction is the same as the second embodiment. In the third embodiment, a glass sheet of thickness t greater than 4 mm is used.

First, as in the second embodiment, the gap T2 between the upper and lower curved support rollers 41, 42 in the downstream part 40b shown in Fig. 8 is adjusted to greater than the gap T1 between the upper and lower curved support rollers 41, 42 in the upstream part, so that T1 < T2.

While a glass sheet 11 inside the furnace 21 is carried on the conveying rollers 22, the glass sheet 11 is heated to near its softening temperature. This heated glass sheet 11 is carried toward the first through fifth bending rollers 25 through 29 of the bending apparatus 24.

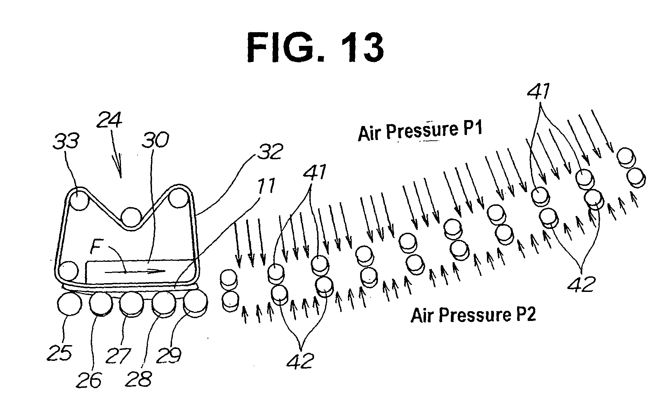

As shown in Fig. 13, the glass sheet 11 heated to near its softening temperature is sandwiched while carried by the first through fifth bending rollers 25 through 29 of the bending apparatus 24 and the heat-resistant belt 32 as shown by the arrow F.

By being sandwiched while carried by the first through fifth bending rollers 25 through 29 and the heat-resistant belt 32, the heated glass sheet 11 can be bent to a predetermined shape of radius R2 (1,300 mm), and a curved glass sheet 12 is obtained as shown in Fig. 5B.

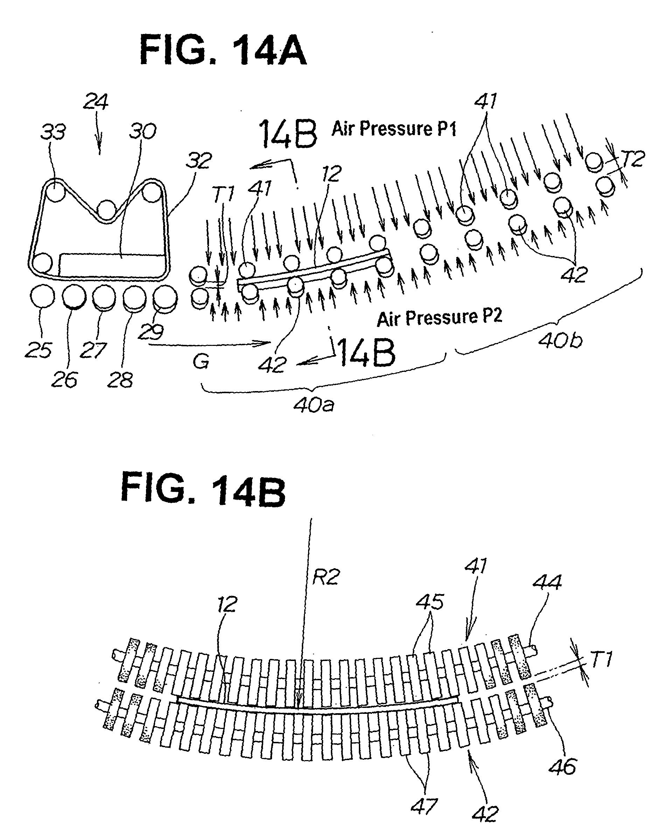

In Fig. 14A, the curved glass sheet 12 bent to the predetermined shape is carried out from the bending apparatus 24 and conveyed into between the upper and lower curved support rollers 41, 42 of the quenching/further bending apparatus 40 as shown by the arrow G.

The jet pressure (air pressure) of the air blown or jetted from the many air nozzles 52 of the upper cooling box 48 (see Fig. 8) will be written. P1 and the jet pressure (air pressure) of the air blown or jetted from the many air nozzles 54 of the lower cooling box 49 (see Fig. 8) will be written P2. The relationship P1 > P2 holds. Thus, the cooling power relative to the upper surface side of the curved glass sheet 12 bent to a predetermined shape can be made stronger or higher than the cooling power relative to the lower surface side, and quenching is carried out with different cooling powers applied to the upper and lower surfaces of the curved glass sheet 12.

In Fig. 14B, during the quenching with different cooling powers being applied to the upper and lower sides of the curved glass sheet 12, the curved glass sheet 12 is restrained by the upper and lower curved support rollers 41, 42. Consequently, during the cooling of the curved glass sheet 12 the curved glass sheet 12 can be prevented from deforming as each portion of it is cooled, and a curving stress is developed in the entire area of the curved glass sheet 12.

The gap T1 between the upper and lower curved support rollers 41, 42 in the upstream part is set to the thickness t of the curved glass sheet 12 plus the first clearance α1 (t+α1), and the first clearance α1 is set to 0 mm ≤ α1 ≤ 3 mm. By setting the first clearance α1 to 0 mm ≤ α1 ≤ 3 mm, it is possible to suppress reflectivity distortion and transparency distortion of the curved tempered glass sheet 10, and also to eliminate undesirable deformation of the rear end of the curved tempered glass sheet 10.

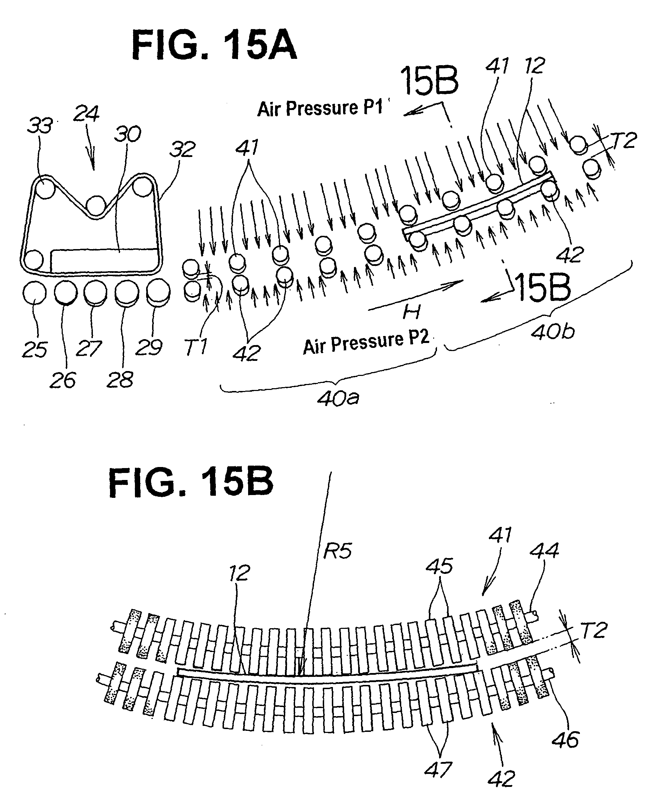

In Fig. 15A, the curved glass sheet 12 is carried from the upstream part to the downstream part as shown by the arrow H. The gap T2 between the upper and lower curved support rollers 41, 42 in the downstream part of the quenching/further bending apparatus 40 is the thickness t of the curved glass sheet 12 plus the second clearance α2 (t+α2), and α1 < α2.

In Fig. 15B, by making α1 < α2 to accommodate a certain amount of deformation of the curved glass sheet 12 and allow residual curving stress in the curved glass sheet 12 to dissipate to some extent, breaking of the curved glass sheet 12 and hindrance of the conveying of the curved glass sheet 12 can be prevented.

Because as mentioned above the cooling power on the upper side is made larger than the cooling power on the lower side, the radius of curvature R5 of the curved glass sheet 12 becomes large and its curvature becomes shallow.

Returning to Fig. 15A, the curved glass sheet 12 is carried out from the upper and lower curved support rollers 41, 42 in the downstream part 40b onto conveying rollers 67 as shown in Fig. 7A.

By the curved glass sheet 12 being carried out onto the conveying rollers 67, the restraining of the curved glass sheet 12 by the upper and lower curved support rollers 41, 42 ends completely. Consequently, the curved glass sheet 12 can curve under the curving stress developed in the entire glass sheet 12. Thus, the tempered glass 12 can be made a curved tempered glass sheet 10 matched to a desired design shape over the whole area of the glass, as shown in Fig. 7B.

Speafically, because as described above the cooling power on the upper side of the curved glass sheet is made larger than the cooling power on the lower side, the radius of curvature R5 of the curved tempered glass sheet 10 can be made larger than the radius R2 (1,300 mm), at for example 1,600 mm.

That is, by the radius of curvature of the curved glass sheet 12 being greatly changed by means of the quenching/further bending apparatus 40, it can be made a curved tempered glass sheet 10 matched to its desired design shape over the whole area of the glass.

In the case of the third embodiment also, a curved tempered glass sheet 10 which is of a predetermined shape can be matched to a desired design shape over the whole area of the glass.

As described above, in the third embodiment also, the same effects as those of the first and second embodiments can be obtained.

Additionally, with the third embodiment, as in the second embodiment, the relationship between the gap T1 between the upper and lower curved support rollers 41, 42 in the upstream part 40a and the gap T2 between the upper and lower curved support rollers 41, 42 in the downstream part 40b is made T1 < T2. Thus, even when the sheet thickness of the curved glass sheet 12 is large, or when the dimensions of the curved glass sheet 12 are large, the curved glass sheet 12 can be prevented from breaking during cooling.

When the sheet thickness t of the curved glass sheet 12 is thick, although it is conceivable that additionally curving the curved glass sheet 12 deeply or shallowly will result in hindrance of the rotation of the upper and lower curved support rollers 41, 42, by the relationship between the gap T1 and the gap T2 being made T1 < T2, this problem can also be eliminated.

As explained above, with the curved tempered glass sheet manufacturing methods in the second and third embodiments, by making the cooling powers applied to the upper and lower side surfaces of the curved glass sheet 12 different, from a curved glass sheet 12 (sheet thickness t: over 4mm, radius R2: 1,300 mm) it is possible to obtain a curved tempered glass sheet 10 having had its radius of curvature changed to between 1,100 and 1,600 mm.

With the methods for manufacturing a curved tempered glass sheet by adjusting cooling powers in the first through third embodiments described above, although it is possible to adjust the curvature in the direction perpendicular to the conveying direction well, with respect to curvature in the conveying direction there remains room for improvement.

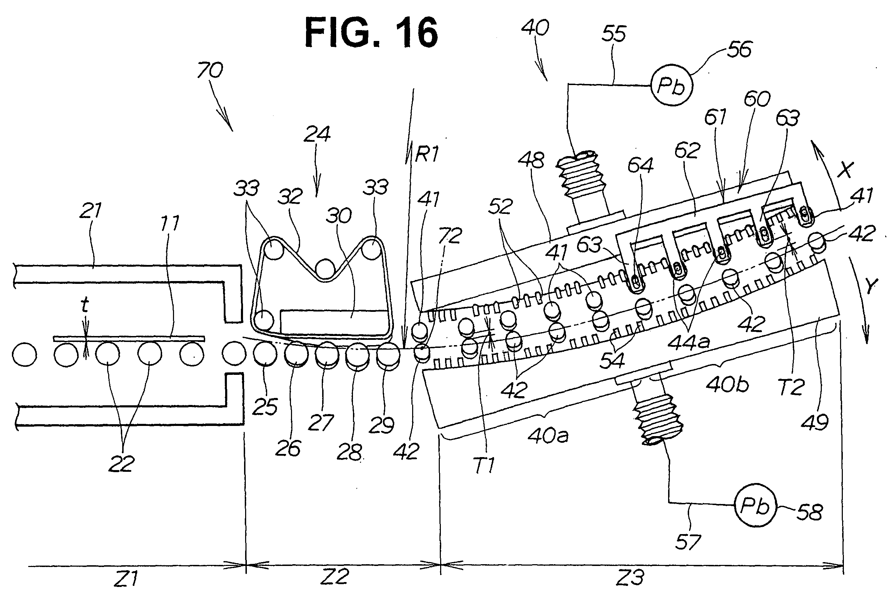

Accordingly, manufacturing methods with which it is possible to adjust curvature in the conveying direction well will now will be described with reference to Fig. 16 to Fig. 18.

Fig. 16 shows a curved tempered glass sheet manufacturing apparatus 70 according to a fourth embodiment of the present invention.

The apparatus 70 has swinging means (not shown) in the quenching/further bending apparatus 40 of the curved tempered glass sheet manufacturing apparatus 20 in the first embodiment. This swinging means of the quenching/further bending apparatus 40 can swing the quenching/further bending apparatus 40 in the arrow X direction (upward) and the arrow Y direction (downward) about the entrance 72 of the quenching/further bending apparatus 40.

By swinging the quenching/further bending apparatus 40 in the arrow X direction (upward), the curvature of the curved glass sheet 12 (see Fig. 2) in the conveying direction can be made deeper.

By swinging the quenching/further bending apparatus 40 in the arrow Y direction (downward), the curvature of the curved glass sheet 12 (see Fig. 2) in the conveying direction can be made shallower.

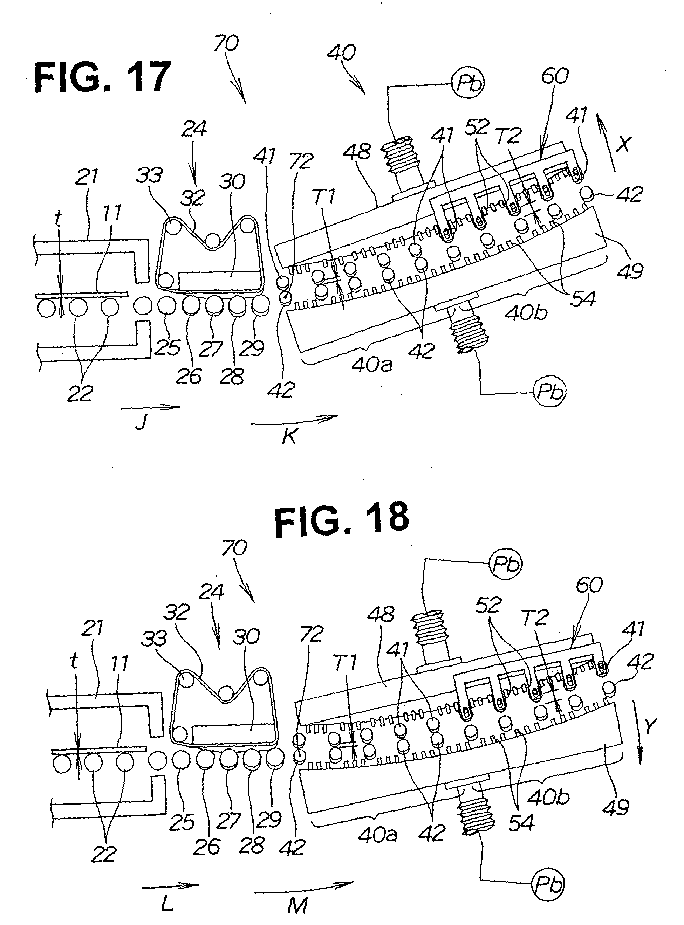

Next, a curved tempered glass sheet manufacturing method in the fourth embodiment will be described with reference to Fig. 17 and Fig. 18.

As shown in Fig. 17, first, the gap T2 between the upper and lower curved support rollers 41, 42 in the downstream part 40b of the quenching/further bending apparatus 40 is made larger than the gap T1 between the upper and lower curved support rollers 41, 42 in the upstream part 40a.

Then, with the swinging means of the quenching/further bending apparatus the quenching/further bending apparatus 40 is swung or pivoted upward as shown by the arrow X about the entrance 72 of the quenching/further bending apparatus 40.

In this state, a glass sheet 11 heated to near its softening temperature in the furnace 21 is carried as shown by the arrow J from the furnace 21 to the bending apparatus 24. By being sandwiched while carried by the bending rollers 25 through 29 and the heat-resistant belt 32 of the bending apparatus 24, this heated glass sheet 11 can be bent to a predetermined shape as in the first through third embodiments.

The curved glass sheet 12 bent to a predetermined shape is carried out from the bending apparatus 24 and conveyed into between the upper and lower curved support rollers 41, 42 of the quenching/further bending apparatus 40 as shown by the arrow K.

The quenching/further bending apparatus 40 has been swung or pivoted upward as shown by the arrow X about the entrance 72 of the quenching/further bending apparatus 40. Consequently, when the curved glass sheet 12 moves in between the upper and lower curved support rollers 41, 42, the part which has moved in is lifted upward.

The respective air nozzles 52, 54 blow air at the upper and lower surfaces of the part lifted up and quench the curved glass sheet 12, and the curved glass sheet 12 can be curved deeply in the conveying direction.

By the time from the upstream part 40a of the quenching/further bending apparatus 40 this curved glass sheet 12 has reached the downstream part 40b, the curved glass sheet 12 has hardened in a deeply curved state in the conveying direction. By making the gap T2 between the upper and lower curved support rollers 41, 42 in the downstream part 40b larger than the gap T1 of the upstream part 40a, the curved glass sheet 12 curved deeply in the conveying direction can be carried well in its hardened state.

Next, a method for curving a heated glass sheet 11 shallowly in the conveying direction will be described on the basis of Fig. 18.

First, the gap T2 between the upper and lower curved support rollers 41, 42 in the downstream part 40b of the quenching/further bending apparatus 40 is made larger than the gap T1 between the upper and lower curved support rollers 41, 42 in the upstream part 40a.

Then, with the swinging means of the quenching/further bending apparatus the quenching/further bending apparatus 40 is swung or pivoted downward as shown by the arrow Y about the entrance 72 of the quenching/ further bending apparatus 40.

In this state, a glass sheet 11 heated to near its softening temperature in the furnace 21 is carried as shown by the arrow L from the furnace 21 to the bending apparatus 24. By being sandwiched while carried by the bending rollers 25 through 29 and the heat-resistant belt 32 of the bending apparatus 24, this heated glass sheet 11 can be bent to a predetermined shape as in the first through third embodiments.

The curved glass sheet 12 bent to a predetermined shape is carried out from the bending apparatus 24 and conveyed into between the upper and lower curved support rollers 41, 42 of the quenching/further bending apparatus 40 as shown by the arrow M.

The quenching/further bending apparatus 40 has been swung or pivoted downward as shown by the arrow Y about the entrance 72 of the quenching/further bending apparatus 40. Consequently, when the curved glass sheet 12 moves in between the upper and lower curved support rollers 41, 42, the part which has moved in is lowered downward.

The respective air nozzles 52, 54 blow air at the upper and lower surfaces of the part lowered down and quench the curved glass sheet 12, and the curvature of the curved glass sheet 12 in the conveying direction can be made shallower.

By the time from the upstream part 40a of the quenching/further bending apparatus 40 this curved glass sheet 12 has reached the downstream part 40b, the curved glass sheet 12 has hardened with its curvature in the conveying direction made shallow. By making the gap T2 between the upper and lower curved support rollers 41, 42 in the downstream part 40b larger than the gap T1 of the upstream part 40a, the curved glass sheet 12 with its curvature in the conveying direction made shallow can be carried well in its hardened state.

Although in the curved tempered glass sheets 10 of the first through fourth embodiments described above examples have been described wherein the concave curvature in the direction perpendicular to the conveying direction is made a circular arc of radius R2, the curvature in the direction perpendicular to the conveying direction is not limited to a concave circular arc. That is, the curvature of the two-directionally curved glass sheet 10 in the direction perpendicular to the conveying direction may be any convex curved shape.

Quenching of a curved glass sheet bent to a predetermined shape with different cooling powers applied to upper and lower surfaces thereof while mechanically restraining the entire area of the glass sheet can produce a tempered glass sheet curved into a desired shape. Such a curved tempered glass sheet is suitable for use as, for example, a side window glass of an automobile.

## Claims

1. A curved tempered glass sheet manufacturing method comprising the steps of:
heating a glass sheet to near its softening temperature in a furnace;
bending the heated glass sheet to a predetermined shape to provide a bent glass sheet; and
changing the curved shape of the bent glass sheet by, while the bent glass sheet is restrained in shape by a pair of a plurality of upper curved support rollers and a plurality of lower curved support rollers and conveyed in a substantially horizontal direction, quenching the bent glass sheet with different cooling powers being applied to upper and lower surfaces thereof.

2. A curved tempered glass sheet manufacturing method according to claim 1, wherein each of the upper and lower curved support rollers comprises plural large-diameter, segmented rollers provided on a curved core support roller shaft, and the surface of each of the large-diameter rollers is covered with a heat-resistant material.

3. A curved tempered glass sheet manufacturing method according to claim 1, wherein the shape of the bent glass sheet is changed by air of different pressures blown to the upper and lower surfaces of the bent glass sheet.

4. A curved tempered glass sheet manufacturing method according to claim 1, wherein the step of bending the glass sheet to a predetermined shape includes providing a bending mold above the glass sheet and a heat-resistant belt between the bending mold and the glass sheet so that during its conveyance, the glass sheet is bent into the predetermined shape by pressing it together with the belt against bending mold.

5. A curved tempered glass sheet manufacturing method according to claim 1, wherein when a gap T1 of an upstream part of between the upper and lower curved support rollers is given as (t+α1), obtained by adding a first clearance α1 to the glass sheet thickness t, and a gap T2 of a downstream part is given as (t+α2), obtained by adding a second clearance α2 to a glass sheet thickness t, α1 is smaller than α2.

6. A curved tempered glass sheet manufacturing method according to claim 5, wherein the first clearance α1 is 0 mm ≤ α1 ≤ 3 mm.

7. A curved tempered glass sheet manufacturing apparatus, comprising:
a furnace for heating a glass sheet to near its softening temperature;
a preliminary bending apparatus for bending the glass sheet heated in the furnace to a predetermined shape; and
a quenching/secondary bending apparatus for changing the curved shape of the bent glass sheet by, while the bent glass sheet bent by the preliminary bending apparatus is restrained in shape by upper and lower curved support rollers and conveyed in a substantially horizontal direction, quenching the bent glass sheet with different cooling powers being applied to upper and lower surfaces thereof.

8. A curved tempered glass sheet manufacturing apparatus according to claim 7, wherein the quenching/secondary bending apparatus has quenching means for changing the shape of the bent glass sheet by air of different pressures blown to upper and lower sides of the bent glass sheet.

9. A curved tempered glass sheet manufacturing apparatus according to claim 7 comprising gap adjusting means which, when a gap T1 of an upstream part of between the upper and lower curved support rollers is set to be (t+α1), obtained by adding a first clearance α1 to a glass sheet thickness t, and a gap T2 of a downstream part is set to be (t+α2), obtained by adding a second clearance α2 to a glass sheet thickness t, allows for adjustment such that α1 becomes smaller than α2.
